# EUROPEAN PATENT APPLICATION

(11) **EP 1 729 209 A1**
(43) Date of publication of application: **06.12.2006**
(21) Application number: 06290908.0
(22) Date of filing: 02.06.2006
(51) Int. Cl.: G06F 3/06

(54) **Digital multimedia data recording/playback device and operating method thereof**

(30) Priority: 02.06.2005 KR 20050047190
(71) Applicant: LG Electronics Inc., Yongdungpo-gu Seoul (KR)
(72) Inventor: Kum, Seung Woo, Boocheon-si Gyeonggi-do (KR)
(74) Representative: Loisel, Bertrand

(57) **Abstract**

Provided are digital multimedia data recording/playback device and operation method thereof. The device includes a user interface and a system controller. The user interface selects a source apparatus having a recording medium on which multimedia data to be copied is stored, and a target apparatus for which a copy operation is performed and having a recording medium on which the multimedia data is to be stored, according to a user's selection. The system controller performs a copy operation of the multimedia data on the source apparatus and the target apparatus selected through the user interface.

## Description

### BACKGROUND OF THE INVENTION

### Field of the Invention

This document relates to a digital multimedia data recording/playback device and an operating method thereof.

### Description of the Related Art

As various video home appliances are brought to the market recently, complex video home appliances (referred to as 'digital multimedia data recording/playback devices' hereinafter) that incorporate recording media having different formats into one device and uses the incorporated recording media are spot-lighted. These digital multimedia data recording/playback devices may include hard disk drives (HDDs), digital versatile disk (DVD) recorders, digital video home systems (DVHSs) provided to inside/outside of the digital multimedia data recording/playback devices. The digital multimedia data recording/playback devices may store broadcasting or input data from the outside on a recording medium using a HDD or a DVD recorder. Also, the digital multimedia data recording/playback devices may include various interfaces such as IEEE 1394 and integrated drive electronics (IDE), and may provide a rich image to a user through various external apparatuses such as DVHSs and camcorders.

Also, the digital multimedia data recording/playback devices have a function of copying a recorded image between recording media having different formats. For example, digital multimedia data recording/playback devices that have a DVD apparatus and a VHS apparatus can simply copy an image recorded on a recoding medium for a DVD onto a recording medium for a VHS, and vice versa.

The digital multimedia data recording/playback devices support two or more recording media having different formats that can store digital multimedia data, and provide a function of copying an image material or file between apparatuses to which different recording media are applied, respectively.

However, digital multimedia data recording/playback devices according to a related art have a problem that convenience in a copy operation is remarkably low.

In a classical copy function using playback and recording, an image material stored on a predetermined recording medium is reproduced and then recorded on other recording medium to perform a copy operation of the image material stored in the predetermined recording medium to other recording medium.

Therefore, a user manipulates a two-stage process where a user plays a first recording medium and then performs recording or copying on a second recording medium in order to perform a copy operation from the first recording medium to the second recording medium.

Also, a user cannot make use of various characteristics provided by an apparatus such as DVD. That is, since a user should perform playback and recording/copy operation as many as the number of titles in order to copy a plurality of titles contained in one DVD, a user should perform operations as many times as two x the number of the titles to be copied.

### SUMMARY OF THE INVENTION

Accordingly, the present invention is directed to a digital multimedia data recording/playback device and an operating method thereof that substantially obviate one or more of the problems due to limitations and disadvantages of the related art.

An object of the present invention is to provide a digital multimedia data recording/playback device and an operating method thereof, capable of copying multimedia data easily and conveniently between recoding media provided to an inside or an outside of the digital multimedia data recording/playback device.

To achieve these and other advantages and in accordance with the purpose of the present invention, as embodied and broadly described, there is provided a digital multimedia data recording/playback device including: a user interface for selecting a source apparatus having a recording medium on which multimedia data to be copied is stored, and a target apparatus on which a copy operation is performed and having a recording medium on which the multimedia data is to be stored, according to a user's selection; and a system controller for performing a copy operation of the multimedia data on the source apparatus and the target apparatus selected through the user interface.

According to another aspect of the present invention, there is provided an operating method for a digital multimedia data recording/playback device, the method including: selecting a source apparatus having a recording medium on which multimedia data to be copied is stored, and a target apparatus on which a copy operation is performed and having a recording medium on which the multimedia data is to be stored, according to a user's selection; and performing a copy operation of the multimedia data on the selected source apparatus and target apparatus.

According to a further another aspect of the present invention, there is provided an operating method for a digital multimedia data recording/playback device, the method including: selecting a first recording medium on which multimedia data to be copied is stored and a second recording medium on which a copy operation is performed and on which the multimedia data is to be stored; exploring multimedia data information stored on the first recording medium and providing the explored information; selecting at least one multimedia data to be copied with reference to the provided multimedia data information; and performing a copy operation of the selected multimedia data.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a schematic block diagram of a digital multimedia data recording/playback device according to the present invention;

FIG. 2 is a view illustrating an example of results explored by a multimedia data explorer provided to a digital multimedia data recording/playback device according to the present invention;

FIG. 3 is a view illustrating current and final position selection window of a copy file in a digital multimedia data recording/playback device according to the present invention;

FIG. 4 is a view illustrating a copy list selection window in a digital multimedia data recording/playback device according to the present invention;

FIG. 5 is a view illustrating a copy file selection window in a digital multimedia data recording/playback device according to the present invention;

FIG. 6 is a view illustrating a copy start window in a digital multimedia data recording/playback device according to the present invention;

FIG. 7 is a view illustrating a copy progression window in a digital multimedia data recording/playback device according to the present invention; and

FIG. 8 is a flowchart illustrating an operation method for a digital multimedia data recording/playback device according to the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

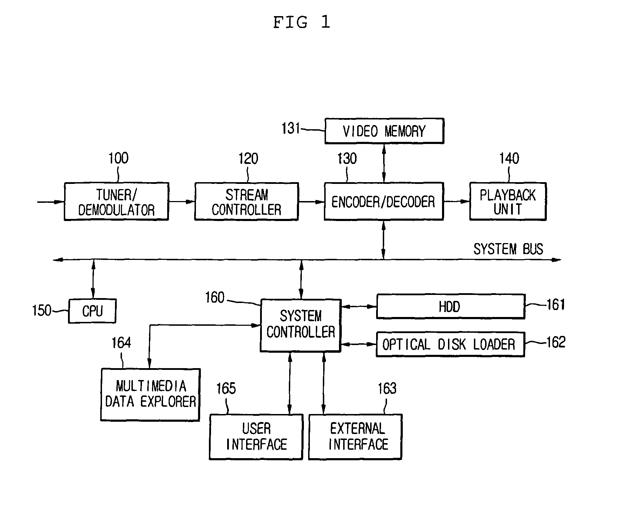

FIG. 1 is a schematic block diagram of a digital multimedia data recording/playback device according to the present invention.

Referring to FIG. 1, the digital multimedia data recording/playback device includes a tuner/demodulator 100, a stream controller 120, an encoder/decoder 130, a video memory 131, a playback unit 140, and a central processing unit (CPU) 150.

The tuner/demodulator 100 receives broadcasting signals from a service medium and outputs digital data. The stream controller 120 controls a transmission path of a data stream from the tuner/demodulator 100. The encoder/decoder 130 performs encoding or decoding on a data stream from the stream controller 120.

The video memory 131 may store a video stream, and the playback unit 140 may reproduce decoded digital data. The CPU 150 controls respective parts of a system in order to receive, reproduce, and record broadcasting.

Also, the digital multimedia data recording/playback device includes: a system controller 160 for controlling various apparatuses; an HDD 161 for storing data; an optical disk loader 162 for performing recording and playback on an input optical disk; an external interface 163 for connecting with an external media apparatus; a multimedia data explorer 164 for analyzing multimedia data stored in a source apparatus for each characteristic and providing the analyzed multimedia data when copying the multimedia data; and a user interface (UI) 165 for receiving a command from a user.

The digital multimedia data recording/playback device will be briefly described below.

The tuner/demodulator 100 converts broadcasting signals from a service medium into digital data streams and outputs the same under control of the CPU 150 through a system bus. The stream controller 120 stores the digital data streams on the HDD 161 and outputs the stored data streams through the encoder/decoder 130. At this point, the encoder/decoder 130 decodes the digital data streams and outputs the decoded digital data streams to the playback unit 140. Also, the encoder/decoder 130 may select the data streams, store the data streams on the video memory 131, read the stored data streams to decode the read data streams, and display the decoded data streams to the playback unit 140.

The system controller 160 delivers data between various peripheral devices and controls the various peripheral devices according to a user's command. The HDD 161, the optical disk loader 162, the external interface 163, and the user interface 165 may be connected to the system controller 160. The HDD 161 may have a large capacity memory in order to record data streams. The optical disk loader 162 may load a recording medium such as a DVD and a blu-ray disk (BD), read data recorded on a recording medium, and record data on a recording medium.

The external interface 163 includes a variety of interfaces. The external interface 163 particularly includes an interface having more than a predetermined speed (e.g., IEEE1394). A camcorder, a DVHS, a memory card may be connected to the external interface 163. Also, the external interface 163 may include interfaces such as IDE and enhanced IDE (EIDE).

Also, the user interface 165 not only receives broadcasting but also controls copying of data to be easily performed between recording media provided to an inside or outside of the device according to a user's command. For that purpose, when a multimedia data copy mode starts, interface means such as a source apparatus and target apparatus selection, multimedia data kind selection, multimedia data file selection, a copy start, copying, and copy completion may be provided. For example, an interface window for each step according to a copy mode is displayed on an OSD so that a user may select a relevant step using a key input part. Also, a graphic user interface (GUI) may be provided.

When a copy mode is performed, the multimedia data explorer 164 reads index information regarding multimedia data stored in the source apparatus, and classifies multimedia data using at least one of multimedia data's kind, a file size, a filename, and a generation date.

When a user intends to copy multimedia data stored on the HDD 161 to an optical disk, the multimedia explorer 164 analyzes only a characteristic selected by a user among the multimedia data stored on the HDD 161 and provides the analyzed characteristic on the OSD. Then, a user selects only a desired multimedia data file and requests copying of the file.

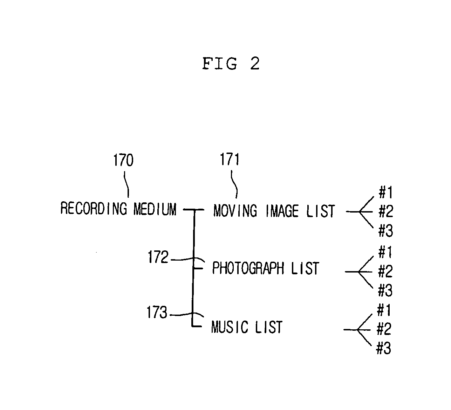

For example, referring to FIG. 2, multimedia data stored on a recording medium 170 may be classified into a moving image list 171, a photograph list 172, and a music list 173. The moving image list 171 may include moving image data having formats such as MPEG, WMV, and AVI. The photograph list 172 may include still image data having formats such as BMP and JPG. The music list 173 may include audio data having formats such as MP3 and WMA. These lists may be provided to a user as a grouped file list, and a filename may be provided together with each file list.

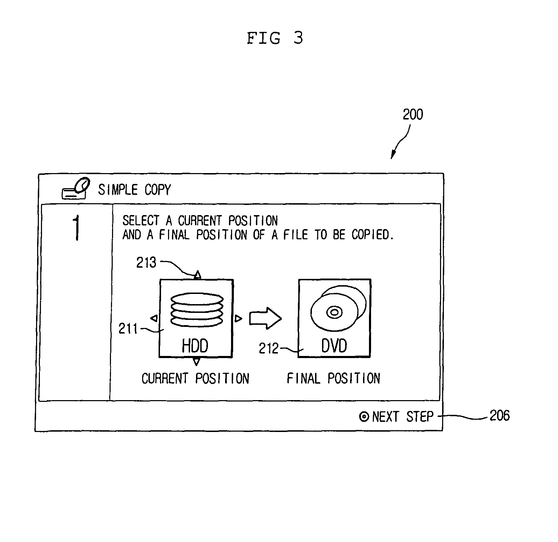

FIGS. 3 through 7 are views sequentially illustrating user interfaces as a copy mode is performed in a digital multimedia data recording/playback device according to the present invention.

Referring to FIG. 3, a copy object selection window 200 may be displayed on the OSD when a copy mode is selected. A source apparatus (source medium) item 211 that corresponds to a current position and a target apparatus (target medium) item 212 that corresponds to a final position are displayed on the copy object selection window 200. At this point, a user can select a source apparatus and a target apparatus using a direction key 213. Here, the source apparatus is an apparatus having a recording medium on which a copy object is stored, and the target apparatus is an apparatus having a recording medium on which the copy object is to be recorded.

Also, when a source apparatus and a target apparatus are selected, the next step is performed through a cursor control menu 206. Here, the source apparatus and the target apparatus may be selected from the HDD and the DVD loader mounted within the digital multimedia data recording/playback device, or may be selected from apparatuses connected to the outside.

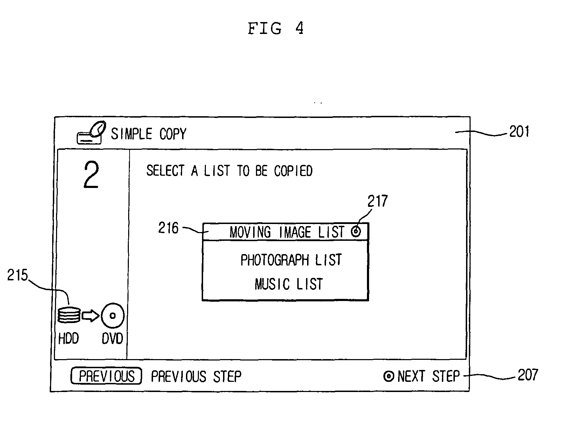

After that, when a source apparatus is selected, multimedia data information stored in the source apparatus is analyzed and a copy list selection window 201 is displayed on an OSD as illustrated in FIG. 4. At this point, a user may select at least one of a moving image list, a photograph list, and a music list displayed on a list display part 216 of the copy list selection window 201. Here, a user may select an item using a color key provided to a remote controller, and an item 217 indicating a list selection state may be displayed. A selection state item 215 of the source apparatus and the target apparatus may be displayed on one side of the copy list selection window 201.

Lists to be copied may be representative lists of the multimedia data stored in a current source apparatus depending on explored results or lists provided as a default.

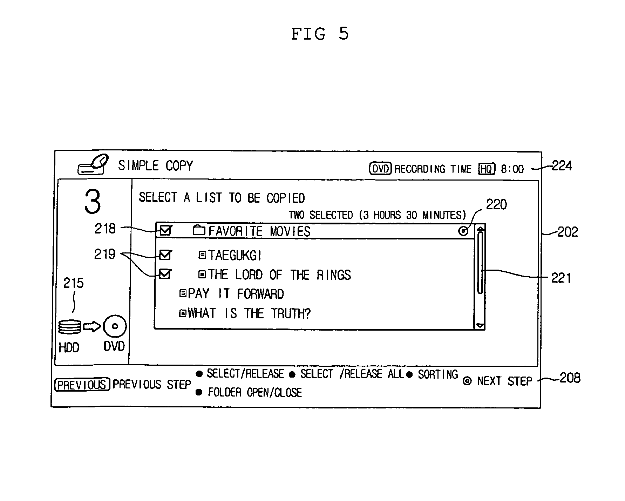

Also, when a list is selected at the copy list selection window 201 and the next step is performed, a user interface may be realized as illustrated in FIG. 5. Here, when a user views a characteristic of a multimedia data file and selects a desired item, only a corresponding file of the characteristics (e.g., a moving image list) is viewed, so that a user can more easily access the desired file.

In FIG. 5, a copy file selection window 202 is displayed when a moving image list is selected. A filename contained in a moving image list is displayed on the copy file selection window 202, and a user selects a file to be copied using user selection keys such as a 'selection/release' key, a 'select/release all' key, an 'sorting' key, and a 'folder open/close' key located on a cursor control menu 208. Here, the 'sorting' key can sort files according to a kind, a file size, and a date. Also, an exploring indication bar 221 is displayed on the right of an exploring window.

At this point, when a user makes selection at a folder on which a cursor is located or at a current file, a current state is inverted so that selection or release is made. A user can select a file or a folder in this manner. Here, it is possible to allow all the files contained in a folder to be selected by selecting only the folder.

Also, the copy file selection window 202 allows a user to select a folder 218 contained in a moving image list and/or files 219 contained in the folder. The number of currently selected files and a time may be displayed, and copy information 224 of a target apparatus may be displayed. Here, a user may add a file by clicking the 'folder open' key.

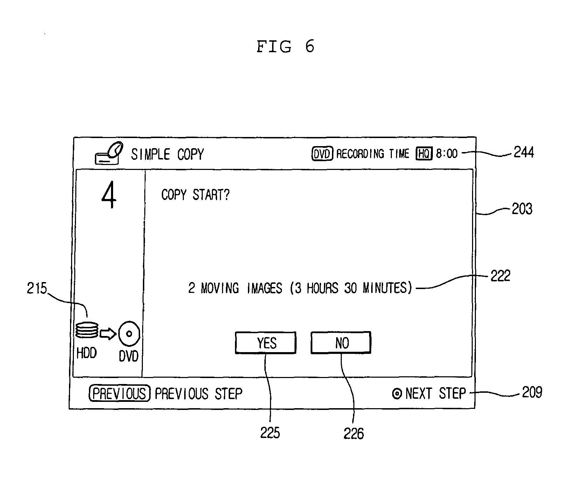

FIG. 6 is a view illustrating a copy start window 224 displayed when a moving image file is selected. The copy start widow 224 questions a user whether to start copying. When a user selects a 'yes' button 225, a next step is performed. At this point, information regarding the moving image 222, for example, the number of moving images to be copied and a copying time may be provided together on a copy start mode window. Additionally, a file size, a generation date, and a filename may be further displayed. Here, a user may select a 'no' button 226, or a user may move to a previous step from a step selection window 209.

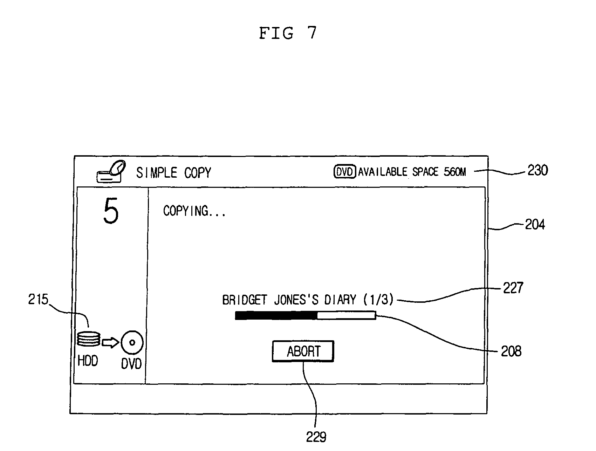

FIG. 7 is a copy progression window 204 displayed when a copy starts, illustrating a filename 227 on which copying is currently performed and a progression state 228. A user may select an 'abort' button 229 to abort a copy operation.

As a final step, when a copy operation is completed, information regarding copied files is displayed, whether a copy is successful or not for respective files, and characteristics of files are displayed so that a user may more easily view results of the copy operation.

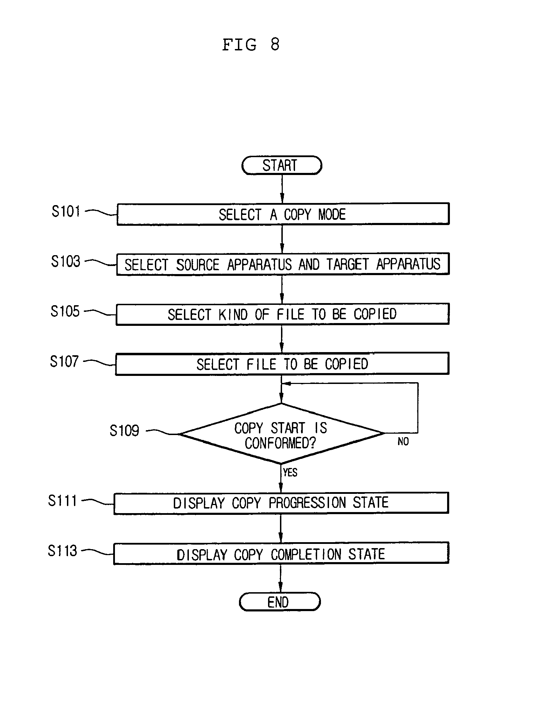

FIG. 8 is a flowchart illustrating an operation method for a digital multimedia data recording/playback device according to the present invention.

A copy mode is selected by a user (S101). A source apparatus and a target apparatus are selected by a user (S103). For example, the method may allow a user to select a source apparatus and a target apparatus from apparatuses connected to inside/outside of the device and having a recording medium using a direction key. At this point, when the source apparatus is selected, a user is allowed to select the kind of a file to be copied (S105). After that, multimedia data information stored in the source apparatus is analyzed, and information regarding the selected kind of the file to be copied is provided to a user.

When a user selects a file to be copied with reference to the information regarding the selected kind of the file to be copied (S107), whether a user selects a copy start conformation is checked (S109). When a user selects the copy start conformation in an operation S109, copy progression state information is displayed (S111). When a copy operation is completed, copy completion state information is displayed (S113).

As described above, according to the present invention, a user can select a source apparatus and a target apparatus in order to perform a copy operation when copying multimedia data between the same kind of apparatuses or different apparatuses provided to inside/outside of the digital multimedia data recording/playback device. Also, according to the present invention, a user interface is established on an OSD to allow an easy access by a user. Also, the present invention allows a user to easily find an object to be copied by analyzing and exploring multimedia data stored in a source apparatus.

According to the present invention, a user simply selects a source apparatus and a target apparatus on which a copy operation is to be performed without driving the source apparatus to perform a described copy operation. That is, while a user reproduces multimedia data using an 'A' apparatus, a user can copy multimedia data stored on a recording medium of a 'B' apparatus onto a recording medium of a 'C' apparatus. The 'A', 'B', and 'C' apparatuses may be recording/playback apparatuses provided to inside/outside of the digital multimedia data recording/playback device according to the present invention. Also, the 'A' apparatus may be a digital broadcasting receiver of the digital multimedia data recording/playback device of the present invention, and the 'B' and 'C' apparatuses may be recording/playback apparatuses provided to inside/outside of the device.

According to a digital multimedia data recording/playback device and an operation method thereof of the present invention, it is possible to copy multimedia data easily and conveniently between recording media provided to inside/outside of the device.

While the present invention has been described and illustrated herein with reference to the preferred embodiments thereof, it will be apparent to those skilled in the art that various modifications and variations can be made therein without departing from the spirit and scope of the invention. Thus, it is intended that the present invention covers the modifications and variations of this invention that come within the scope of the appended claims and their equivalents.

## Claims

1. A digital multimedia data recording/playback device comprising:
a user interface for selecting a source apparatus having a recording medium on which multimedia data to be copied is stored, and a target apparatus on which a copy operation is performed and having a recording medium on which the multimedia data is to be stored, according to a user's selection; and
a system controller for performing a copy operation of the multimedia data on the source apparatus and the target apparatus selected through the user interface.

2. The device according to claim 1, further comprising a multimedia data explorer for exploring multimedia data information stored on the recording medium provided to the source apparatus and providing the explored multimedia data information.

3. The device according to claim 1, wherein the multimedia data comprise moving image data, still image data, and audio data.

4. The device according to claim 1, wherein the source apparatus and the target apparatus are provided to an inside of the device or connected to the outside of the device.

5. The device according to claim 1, wherein the source apparatus comprises a HDD (hard disk drive), an optical disk loader, a DVHS (digital video home system), and a memory card.

6. The device according to claim 1, wherein the target apparatus comprises a HDD (hard disk drive), an optical disk loader, a DVHS (digital video home system), and a memory card.

7. The device according to claim 1, wherein the user interface is realized using an OSD (on screen display).

8. The device according to claim 1, wherein the system controller performs the copy operation by a file unit without playback of multimedia data when performing the copy operation on the multimedia data.

9. The device according to claim 1, further comprising an external interface for connecting with an external apparatus.

10. The device according to claim 9, wherein the external interface comprises IEEE1394, IDE (Integrated Drive Electronics), and EIDE (Enhanced Integrated Drive Electronics).

11. An operating method for a digital multimedia data recording/playback device, the method comprising:
selecting a source apparatus having a recording medium on which multimedia data to be copied is stored, and a target apparatus on which a copy operation is performed and having a recording medium on which the multimedia data is to be stored, according to a user's selection; and
performing a copy operation of the multimedia data on the selected source apparatus and target apparatus.

12. The method according to claim 11, further comprising, after the selecting of the source apparatus and the target apparatus according to the user's selection;
exploring multimedia data information stored on the recording medium provided to the source apparatus; and
providing the explored multimedia data information.

13. The method according to claim 12, wherein the user selects at least one multimedia data to be copied with reference to the multimedia data information.

14. The method according to claim 11, wherein the multimedia data comprise moving image data, still image data, and audio data.

15. The method according to claim 11, wherein the source apparatus and the target apparatus are provided to an inside of the device or connected to the outside of the device.

16. The method according to claim 11, wherein the selecting of the source apparatus and the target apparatus comprises selecting the source apparatus and the target apparatus using a user interface realized as an OSD.

17. The method according to claim 11, wherein the copying of the multimedia data comprises performing the copying by a file unit without playback of the multimedia data.

18. An operating method for a digital multimedia data recording/playback device, the method comprising:
selecting a first recording medium on which multimedia data to be copied is stored, and a second recording medium on which a copy operation is performed and on which the multimedia data is to be stored;
exploring multimedia data information stored on the first recording medium and providing the explored information;
selecting at least one multimedia data to be copied with reference to the provided multimedia data information; and
copying the selected multimedia data.

19. The method according to claim 18, wherein the selecting of the first recording medium and the second recording medium comprises selecting the first recording medium and the second recording medium using a user interface realized as an OSD.

20. The method according to claim 18, wherein the copying of the selected multimedia data comprises copying the multimedia data by a file unit without playback of the multimedia data.
